# NOUVEAU FASCICULE DE BREVET EUROPEEN

(11) **EP 0 864 798 B2**
(45) Date de publication et mention de la décision concernant l'opposition: **25.03.2009**
(45) Mention de la délivrance du brevet: 04.12.2002
(21) Numéro de dépôt: 98420028.7
(22) Date de dépôt: 13.02.1998
(51) Int. Cl.: F16L 33/207

(54) **Procédé pour raccorder une canalisation souple à un tube rigide, frette pour la mise en oeuvre du procédé et raccord obtenu**
Verfahren zum Verbinden eines Schlauches mit einem Rohr, Kupplung und Befestigungsring zum Durchführen dieses Verfahrens
Method for connecting a hose to a rigid pipe; coupling and retaining ring for carrying out the method

(30) Priorité: 14.02.1997 FR 9701975
(43) Date de publication de la demande: 16.09.1998
(73) Titulaire: Freudenberg, Société Anonyme:, 71000 Macon (FR); Cintrag-Industrie, Société Anonyme, 69126 Brindas (FR)
(72) Inventeur: Aberlenc, Christian, 42210 St Andre-Le Puy (FR); Ragache, Gérard, 69160 Tassin La Demi-Lune (FR)
(74) Mandataire: Thibault, Jean-Marc

(56) Documents cités:
- FR-A- 1 408 901
- FR-A- 2 686 961
- US-A- 3 549 180
- US-A- 3 924 883
- US-A- 5 387 016

## Description

La présente invention concerne le domaine technique du raccordement ou de la connexion entre un tube rigide et une canalisation souple.

L'objet de l'invention trouve une application particulièrement avantageuse dans le domaine des véhicules automobiles et, plus particulièrement, dans la réalisation des raccords entre un tube rigide et une canalisation souple en vue de constituer un circuit de circulation d'un fluide, par exemple de freinage ou d'embrayage.

Dans le domaine technique préféré ci-dessus, un circuit de circulation d'un fluide hydraulique de freinage ou d'embrayage comporte un tube ou une canalisation rigide monté de manière fixe sur le véhicule. Une telle canalisation rigide est raccordée au récepteur de la canalisation par l'intermédiaire d'au moins une canalisation souple ou un flexible, afin de tenir compte des déplacements relatifs du récepteur.

Il est à considérer que la connexion entre la canalisation souple et le flexible doit respecter de nombreuses conditions imposées par des normes. De plus, l'utilisation d'une canalisation souple conduit à utiliser un flexible possédant une section de passage la plus petite possible pour éviter les problèmes de déformation ou de dilatation. Il s'ensuit que le raccordement du flexible est réalisé sur un embout de réception dont le diamètre externe est inférieur au diamètre externe de la canalisation rigide.

Dans l'état de la technique, il est connu d'assurer le raccordement entre le tube rigide et la canalisation souple à l'aide d'un système de connexion par vissage. Chaque système de connexion comporte un raccord femelle présentant un embout sur lequel est emmanchée l'extrémité de la canalisation souple qui se trouve sertie par une douille s'étendant du raccord femelle en relation de l'embout. Le raccord femelle présente un taraudage destiné à coopérer avec une douille filetée montée sur l'extrémité du tube rigide qui comporte un pli destiné à coopérer avec un siège du raccord femelle pour assurer l'étanchéité du raccordement ainsi réalisé.

Une telle solution présente un inconvénient manifeste tenant aux différentes opérations d'assemblage à réaliser. En effet, il s'avère nécessaire, pour chaque raccordement à effectuer, de monter une douille sur le tube rigide, d'équiper l'extrémité du flexible d'un raccord femelle et d'assurer le vissage entre l'embout et le raccord femelle. Il s'ensuit un problème de coût pour fabriquer de telles canalisations. De plus, la mise en oeuvre d'un raccord du type à vis présente par principe, un risque de fuite entre la canalisation flexible et le tube rigide.

Il est connu, par ailleurs, notamment par le brevet US 5 387 016, de réaliser un connecteur à partir d'un tronçon de tube présentant, d'un côté, un embout dilaté pour recevoir une première canalisation et, de l'autre côté, un embout muni extérieurement de stries et intérieurement d'une bague. L'embout est destiné à recevoir extérieurement une deuxième canalisation assemblée au connecteur à l'aide d'une douille de sertissage. Cette douille de sertissage est montée sur le connecteur entre une collerette et un épaulement formé par la dilatation de l'embout.

Il est à noter que ce brevet décrit une technique de réalisation d'un connecteur qui ne se trouve pas adaptée à la fabrication d'un système de raccordement entre une canalisation souple et un tube rigide présentant une longueur relativement importante. En effet, dans ce cas, il apparaît possible d'intervenir uniquement sur une extrémité du tube, contrairement au connecteur décrit par ce brevet, qui présente, d'un côté, un embout muni de stries et, de l'autre côté, un embout dilaté. Par ailleurs, ce connecteur nécessite la mise en oeuvre, en plus d'une douille de sertissage, d'une bague insérée à l'intérieur de l'embout, ce qui rétrécit la section de passage du fluide sur une longueur limitée. Un tel rétrécissement constitue un inconvénient majeur pour la circulation d'un fluide appartenant à un circuit de freinage.

L'objet de l'invention vise donc à éliminer les inconvénients énoncés ci-dessus en proposant une technique permettant d'assurer un raccordement étanche entre une canalisation souple et un tube rigide, présentant un coût de réalisation diminué par rapport aux solutions techniques antérieures tout en n'affectant pas la circulation du fluide et tout en évitant les problèmes de déformation ou de dilatation de la canalisation souple.

Pour atteindre cet objectif, l'objet de l'invention vise à proposer un procédé pour assurer le raccordement à l'aide d'une douille de sertissage, entre un tube rigide et une canalisation souple dont le diamètre interne est inférieur au diamètre externe du tube rigide.

Selon l'invention, le procédé comprend les étapes suivantes :
- réaliser par une opération de repoussage, une première collerette sur le tube rigide en délimitant avec l'extrémité voisine, un embout,
- réaliser une opération de filage sur l'embout du tube rigide, afin d'obtenir un embout rétreint présentant, d'une part, un diamètre externe inférieur au diamètre externe du tube rigide et, d'autre part, une épaisseur de matière augmentée d'au moins 10 % par rapport à son épaisseur initiale,
- enfiler la douille de sertissage sur l'embout retreint jusqu'à la première collerette,
- et réaliser par une opération de repoussage sur l'élément retreint, une deuxième collerette qui assure en coopération avec la première collerette, le coincement de la douille de sertissage.

L'objet de l'invention vise également à offrir un nouveau système de raccordement comportant une douille de sertissage sertie, de part et d'autre, par une première et deuxième collerettes réalisées sur le tube rigide qui présente en relation de la douille de sertissage, un embout rétreint présentant, d'une part, diamètre externe inférieur au diamètre externe du tube rigide et, d'autre part, une épaisseur de matière augmentée d'au moins 10 % par rapport à l'épaisseur de matière du tube rigide.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est une vue en coupe transversale montrant un système de raccordement conforme à l'invention.

Les **fig. 2, 3** et **4** sont des vues en élévation montrant différentes étapes caractéristiques du procédé de réalisation d'un système de raccordement conforme à l'invention.

La **fig. 5** est une vue en coupe transversale montrant un système de raccordement avant d'être équipé d'une canalisation souple.

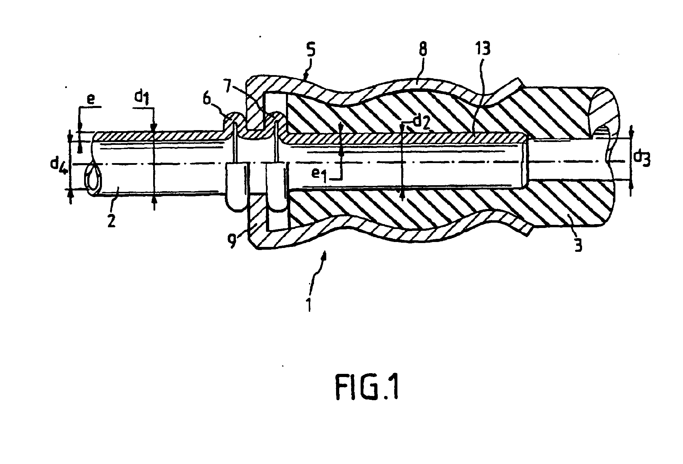

Tel que cela ressort plus précisément de la **fig. 1**, l'objet de l'invention vise à proposer un système **1** de raccordement ou de connexion étanche entre une canalisation ou un tube rigide **2** et une canalisation souple ou un flexible **3**. D'une manière préférée, le tube rigide **2** assemblé à la canalisation souple **3** est destiné à faire partie d'un circuit de circulation d'un fluide au sens général, associé de préférence à un système de freinage ou d'embrayage équipant un véhicule automobile. Le tube rigide **2** et la canalisation souple **3** sont réalisés en des matériaux appropriés pour assurer la circulation d'un fluide, en particulier hydraulique. Par exemple, le tube rigide **2** est réalisé en acier, tandis que la canalisation souple **3** est constituée d'un composite comportant un tube intérieur en caoutchouc revêtu de deux tresses textiles, l'ensemble étant coiffé par un revêtement caoutchouc.

Conformément à l'invention, le système de raccordement **1** comporte une douille de sertissage **5** fixée rigidement entre une première collerette **6** et une deuxième collerette **7**, réalisées sur le tube rigide **2**. La douille **5** présente un manchon tubulaire **8** prolongé à l'une de ses extrémités, par un anneau **9** dans lequel est aménagé un trou central pour le montage de la douille sur le tube rigide **2.** L'anneau **9** de la douille **5** est ainsi emprisonné entre les deux collerettes **6** et **7** réalisées sur le tube en formant chacune un pli. La douille **5** se trouve ainsi emprisonnée ou sertie sur le tube rigide **2**.

Tel que cela ressort de la **fig. 1**, le tube rigide **2** présente, au-delà de la collerette **7** placée la plus proche de l'extrémité libre du tube, une partie terminale constituant un embout retreint **13** sur lequel est emmanchée la canalisation flexible **3**. L'embout retreint **13** s'étend sur une longueur sensiblement égale à la longueur axiale du manchon **8** sur une distance adaptée pour assurer un sertissage efficace de la douille **5** sur la canalisation souple **3**, de manière à résister à des contraintes de traction mises en oeuvre pour une canalisation d'un circuit de freinage ou d'embrayage.

Tel que cela apparaît clairement sur la **fig. 1**, le diamètre externe d₁ du tube **2** est supérieur au diamètre externe **d₂** de l'embout retreint **13.** Une telle caractéristique permet de monter une canalisation flexible **3** présentant un diamètre interne **d₃** inférieur au diamètre externe **d₁** du tube rigide **2.**

Par ailleurs, l'embout rétreint **13** présente une épaisseur de matière **e₁** supérieure ou augmentée d'au moins 10 % par rapport à l'épaisseur **e** du tube rigide **2.** Par exemple, l'épaisseur de matière **e₁** de l'embout rétreint **13** est supérieure par rapport à l'épaisseur **e** du tube **2,** d'une valeur comprise entre 10 et 20 % et, de préférence, de l'ordre de 15 %. L'augmentation de l'épaisseur de la matière constitutive de l'embout rétreint **13** permet à ce dernier de ne pas subir de déformation lors de l'opération de sertissage de la canalisation souple **3** à l'aide de la douille **5**.

Le système de raccordement **1** ainsi réalisé présente l'avantage de comporter une pièce unique constitué par le tube rigide **2** équipé d'une douille **5** sur laquelle est destinée à être sertie la canalisation souple **3.** Un tel système de raccordement permet, avec l'aide d'une pièce unique, d'assurer une liaison mécanique rigide et étanche entre un tube rigide **2** et la canalisation souple **3**.

Selon une caractéristique avantageuse de l'invention, l'embout retreint **13** possède un diamètre externe **d₂,** tel que le rapport entre ce dernier et le diamètre externe **d₁** du tube rigide **2** soit inférieur ou égal à 0,8. Dans un exemple préféré de réalisation, le diamètre **d₁** est égal à 4,75 mm, tandis que le diamètre **d₂** est égal à 3,6 mm, donnant un rapport égal à 0,75. Dans un autre exemple de réalisation, le diamètre initial **d₁** du tube rigide **2** est égal à 6,35 mm, tandis que le diamètre **d₂** de l'embout retreint est égal à 5 mm. De plus, un tel système de raccordement **1** est adapté pour assurer la connexion d'une canalisation souple **3** sur un tube rigide **2** dont le rapport entre son épaisseur **e** et son diamètre externe **d₁** est supérieur à 0,1. Dans l'exemple illustré, l'épaisseur du tube rigide **2** est égale à 0,7 mm, de sorte que le rapport de son épaisseur sur son diamètre externe est égal 0,14.

L'objet de l'invention vise également à proposer un procédé permettant d'assurer la réalisation du système de raccordement **1**, tel que décrit ci-dessus. Le système de raccordement **1** est réalisé à partir d'un tube rigide **2** à caractère malléable pour subir diverses opérations de déformation. Dans l'exemple de réalisation qui suit, le tube rigide **2** est réalisé en acier et présente un diamètre extérieur **d₁** égal à 4,75 mm et une épaisseur égale à 0,7 mm. De plus, le tube **2** présente une longueur relativement importante, par exemple, supérieure à quelques dizaines de centimètres.

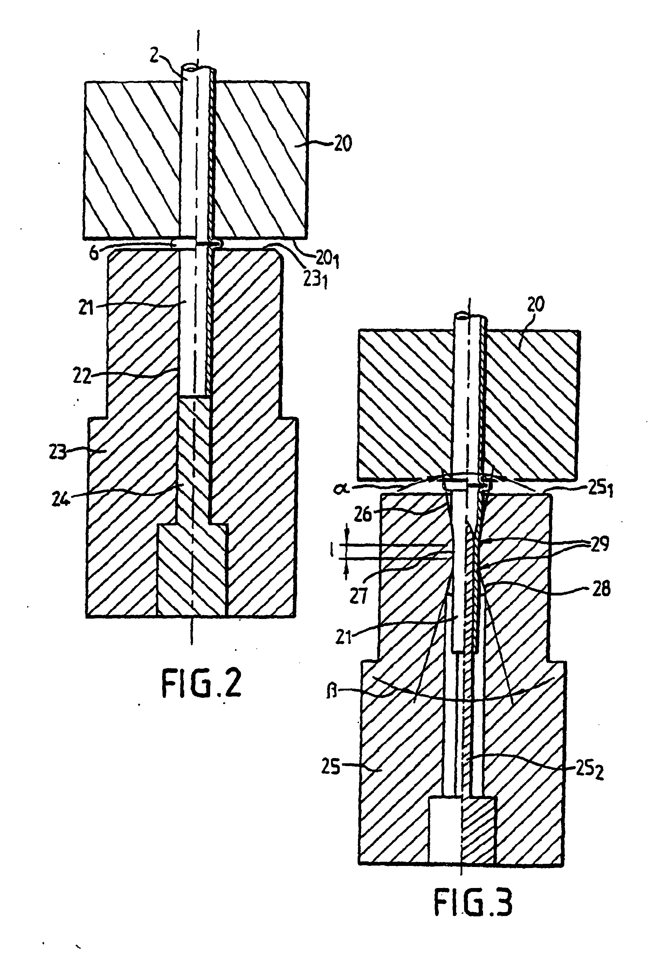

Tel que cela ressort plus précisément de la **fig. 2****,** le procédé consiste à réaliser par une opération de repoussage, la première collerette **6** sur le tube rigide **2**. A cet effet, le tube rigide **2** est maintenu dans un mandrin **20** en laissant dépasser une partie terminale **21** de longueur donnée sur laquelle est destiné à s'emmancher un alésage interne **22** réalisé à l'intérieur d'un outil ou d'une frette **23.** L'alésage **22** présente un diamètre légèrement supérieur au diamètre externe **d₁** du tube rigide **2.** L'alésage central **22** est destiné à recevoir un pion de poussée **24** destiné à agir sur l'extrémité libre de la partie terminale **21** du tube, de manière à repousser ou à refouler la matière entre les deux parois transversales **20₁** et **23₁**, respectivement du mandrin **20** et de la frette **23.** Le repoussage ou le refoulage de la matière conduit à la réalisation d'un pli de matière formant la collerette **6.**

Tel que cela ressort plus précisément de la **fig. 3****,** le procédé de fabrication consiste à réaliser une opération de rétreint sur l'embout **21** du tube rigide **2**, afin d'obtenir l'embout retreint **13**. Selon une caractéristique avantageuse, cette opération de rétreint est assurée par une opération de filage, réalisée par l'intermédiaire d'une frette **25** comportant un cône d'entrée **26** à travers lequel est destiné à être engagé l'embout **21.** Le cône d'entrée **26** s'ouvre en direction et sur la face transversale **25₁** de la frette. La section droite transversale du cône d'entrée **26** croît ainsi en direction de la face transversale **25₁** de la frette. Le cône d'entrée **26** est raccordé par une zone de filage **27** de longueur **l,** à un cône de retour **28** orienté en sens contraire de celui du cône d'entrée **26.** Tel que cela ressort précisément de la **fig. 3****,** la frette **25** présente ainsi deux cônes inversés **26, 28** reliés entre-eux par une zone intermédiaire de filage **27** dont la section de passage définit le diamètre **d₂** de l'embout retreint à obtenir. Dans l'exemple illustré, la zone de filage **27** présente un diamètre de passage égal à 3,6 mm. La longueur axiale **l** de la zone de filage **27** est limitée pour éviter un frottement trop important de la matière tout en étant suffisante pour éviter la déformation de la matière. Dans l'exemple illustré, la longueur axiale de la zone de filage est de l'ordre de 2 mm.

Selon une caractéristique avantageuse, les cônes d'entrée **26** et de retour **28** sont reliés à la zone de filage **27** par l'intermédiaire de congés de raccordement **29.** Dans l'exemple illustré, l'angle d'ouverture α du cône d'entrée **26** est de l'ordre de 20°, tandis que l'angle d'ouverture β du cône de retour **28** est inférieur à 45° et, de préférence, de l'ordre de 30°. Il est à noter que l'angle α du cône d'entrée **26** présente une valeur toujours inférieure à la valeur de l'angle β du cône de retour **28**.

L'opération de filage consiste à assurer l'engagement de la partie terminale de l'embout **21** à l'intérieur du cône d'entrée **26** de la frette **25**, conduisant à un rétrécissement de l'embout sur la majeure partie de sa longueur. Durant cette phase aller de pénétration du tube à l'intérieur de la frette, il se produit un refoulement de matière dans le cône de retour **28.** Lors de la phase de retrait de la frette **25,** le cône de retour **28** assure la formation définitive, en combinaison avec la zone de filage **27,** de l'embout retreint **13.**

Cette opération de filage permet d'obtenir un embout rétreint **13** dont le diamètre externe **d₂** est inférieur au diamètre externe **d₁** du tube rigide **2**, selon les valeurs préférées indiquées ci-dessus. De même, cette opération de filage permet d'augmenter, selon les valeurs déjà indiquées, l'épaisseur de matière de l'embout rétreint **13** par rapport à son épaisseur initiale, c'est-à-dire correspondant à celle du tube rigide **2** non déformé.

Selon une caractéristique préférée de réalisation, la frette **25** est équipée d'un pion de calibrage **25₂** destiné à s'engager à l'intérieur de l'embout **21** lors de l'opération de déformation. Le pion de calibrage **25₂** s'étend à l'intérieur du cône de retour **28** et au moins au-delà de la zone de filage **27** par rapport au cône de retour **28.** Le pion de calibrage **25₂** possède un diamètre externe égal à la valeur minimale que doit présenter le diamètre interne de l'embout retreint **13.** Ainsi, l'opération de filage permet d'obtenir un embout retreint **13** présentant un diamètre externe **d₂** inférieur au diamètre **d₁** du tube et un diamètre interne égal au moins à une valeur donnée.

Dans l'exemple qui précède, la collerette **6** est réalisée préalablement à l'embout retreint **13**. Bien entendu, l'ordre des opérations de repoussage et de filage peut être inversé.

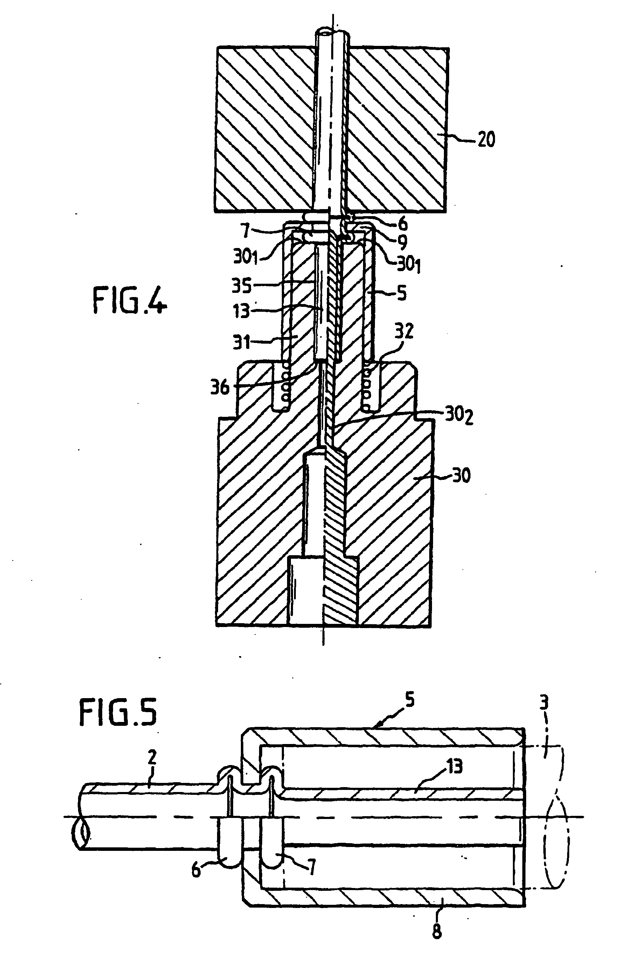

Le procédé selon l'invention consiste ensuite, comme illustré à la **fig. 4**, à enfiler la douille de sertissage **5** sur l'embout retreint **13** jusqu'à la première collerette **6.** De préférence, cette opération d'enfilage est réalisée simultanément à une opération de repoussage permettant de réaliser la deuxième collerette **7**.

Cette opération est réalisée par l'intermédiaire d'une frette **30** munie d'un nez d'engagement **31** sur lequel est emmanchée la douille de sertissage **5** sollicitée élastiquement par un ressort de rappel **32**. Le nez **31** de la frette comporte un alésage **35** dont le diamètre est sensiblement égal au diamètre externe de l'embout retreint **13.** L'alésage **35** débouche sur la face avant transversale **30₁** de la frette pour permettre à l'embout **13** de pénétrer dans la frette **30.** L'alésage **35** est pourvu d'un épaulement de poussée **36** destiné à venir en appui sur l'extrémité libre de l'embout **13.** L'épaulement **36** est réalisé à une distance déterminée de la face avant **30₁,** de manière que le déplacement de la frette assure le refoulement de la matière entre la face transversale **30₁** de la frette et l'anneau **9** de la douille **5.** La deuxième collerette **7** est ainsi formée par un pli de matière venant coincer ou sertir la douille **5** sur le tube rigide **2**.

Selon une caractéristique préférée de réalisation, la frette **30** est équipée d'un pion de calibrage **30₂** s'étendant à l'intérieur de l'alésage **35** en dépassant la face transversale avant **30₁** de la frette. Le pion de calibrage **30₂** est destiné à s'engager à l'intérieur de l'embout retreint **13** lors de l'opération de repoussage décrite ci-dessus, de façon à garantir une section interne de passage minimum pour l'embout retreint **13** au moins égale à celle du pion de calibrage.

Dans la description qui précède du procédé de fabrication, la première **6** et la deuxième **7** collerettes sont réalisées lors de deux opérations distinctes de repoussage. Il est à noter que les deux collerettes **6**, **7** peuvent être réalisées simultanément lors d'une seule opération de repoussage. Dans cet exemple de réalisation, l'embout rétreint **13** est d'abord réalisé sur le tube rigide **2** et la douille **5** est emmanchée sur le tube rigide **2** avant l'exécution de l'opération de repoussage réalisant les deux collerettes.

Tel que cela ressort plus précisément de la **fig. 5**, la douille **5** se trouve ainsi montée fixement sur le tube rigide **2** équipé d'un embout retreint **13**, en formant ensemble une pièce unique, éliminant ainsi les problèmes de fuite. Le tube **2** est destiné à recevoir une canalisation souple **3** qui se trouve emmanchée sur l'embout retreint **13** et entre la douille **5**. Une opération de sertissage de la douille **5** sur le flexible **3** permet d'assurer l'assemblage du tube rigide **2** avec la canalisation souple **3** permettant d'obtenir une connexion étanche. De plus, le sertissage de la douille **5** peut être effectué sans entraîner de déformation de l'embout rétreint **13** en raison de son épaisseur renforcée.

## Revendications

1. Procédé pour assurer le raccordement, à l'aide d'une douille de sertissage (5), entre un tube rigide (2) et une canalisation souple (3) dont le diamètre interne (d3) est inférieur au diamètre externe (d1) du tube rigide, le procédé comprenant les étapes suivantes :
- réaliser par une opération de repoussage, une première collerette (6) sur le tube rigide (2) en délimitant avec l'extrémité voisine, un embout (21),
- réaliser une opération de filage sur l'embout (21) du tube rigide, afin d'obtenir un embout rétreint (13) présentant, d'une part, un diamètre externe (d2) inférieur au diamètre externe (d1) du tube rigide et, d'autre part, une épaisseur de matière (e1) augmentée d'au moins 10 % par rapport à son épaisseur initiale (e),
- enfiler la douille de sertissage (5) sur l'embout retreint (13) jusqu'à la première collerette (6),
- et réaliser par une opération de repoussage sur l'embout retreint (13), une deuxième collerette (7) qui assure en coopération avec la première collerette (6), le coincement de la douille de sertissage (5) sur le tube (2).

2. Procédé selon la revendication 1, **caractérisé en ce qu'**il consiste à emmancher la canalisation souple (3) sur l'embout retreint (13) et à assurer le sertissage de la douille (5) sur la canalisation souple (3).

3. Procédé selon la revendication 1, **caractérisé en ce qu'**il consiste à réaliser l'opération de filage sur l'embout du tube rigide, de manière que le rapport entre le diamètre externe (d2) de l'embout rétreint (13) sur le diamètre externe (d1) du tube rigide (2) soit inférieur ou égal à 0,8.

4. Procédé selon la revendication 1 ou 3, **caractérisé en ce qu'**il consiste à réaliser l'opération de filage sur l'embout du tube rigide, de manière que l'épaisseur de matière (e1) de l'embout se trouve augmentée par rapport à son épaisseur initiale, d'une valeur comprise entre 10 et 20 % et, de préférence, de l'ordre de 15 %.

5. Procédé selon la revendication 3 ou 4, **caractérisé en ce qu'**il consiste à assurer l'opération de filage à l'aide d'une frette (25) comportant un cône d'entrée (26) ouvert vers l'extérieur et à travers lequel s'engage l'embout du tube rigide, le cône d'entrée (26) étant raccordé, par une zone de filage (27) de diamètre égal au diamètre (d2) de l'embout retreint (13) à réaliser, à un cône de retour (28) orienté en sens contraire de celui du cône d'entrée (26).

6. Procédé selon la revendication 1, **caractérisé en ce qu'**il consiste à enfiler la douille de sertissage (5) sur l'embout retreint (13) lors de l'opération de formation de la deuxième collerette (7).

7. Procédé selon l'une des revendications 1, 3 à 4 **caractérisé en ce qu'**il consiste, lors de l'opération de filage et/ou de repoussage pour la réalisation de la deuxième collerette (7), à engager un pion de calibrage (25₂, 30₂) à l'intérieur de l'embout (21, 13) pour garantir une section de passage minimale pour l'embout retreint (13).

8. Système de raccordement à l'aide d'une douille de sertissage (5), entre un tube rigide (2) et une canalisation souple (3), comportant une douille de sertissage (5) sertie, de part et d'autre, par une première (6) et deuxième (7) collerettes réalisées sur le tube rigide (2) qui présente en relation de la douille de sertissage, un embout retreint **caractérisé en ce que** l'embout rétreint présente, d'une part, un diamètre externe (d2) inférieur au diamètre externe (d1) du tube rigide et, d'autre part, une épaisseur de matière (e1) augmentée d'au moins 10 % par rapport à l'épaisseur de matière (e) du tube rigide (2).

9. Système de raccordement selon la revendication 8, **caractérisé en ce que** l'embout retreint (13) possède un diamètre externe (d2), tel que le rapport entre ce dernier et le diamètre externe (d1) du tube rigide soit inférieur ou égal à 0,8.

10. Système de raccordement selon la revendication 8 ou 9, **caractérisé en ce que** l'embout rétreint (13) possède une épaisseur de matière (e1) augmentée par rapport à l'épaisseur de matière (e) du tube rigide, d'une valeur comprise entre 10 et 20 % et, de préférence, de l'ordre de 15%.

11. Système de raccordement selon la revendication 8 ou 9, **caractérisé en ce que**, sur l'embout retreint (13), est remmanché la canalisation souple (3) sur laquelle est sertie la douille (5).

12. Système de raccordement selon l'une des revendications 8 à 11, **caractérisé en ce que** le tube rigide présente un rapport entre son épaisseur (e) et son diamètre externe (d1) supérieur à 0,1.

## Claims

1. A method of using a crimping bushing (5) to make a connection between a rigid tube (2) and a flexible hose (3) of inside diameter (d3) smaller than the outside diameter (d1) of the rigid tube, the method comprising the following steps:
implementing a metal spinning operation to make a first collar (6) on a rigid tube (2) defining with the adjacent end an endpiece (21);
implementing an extrusion operation on the endpiece (21) of the rigid tube in order to obtain a swaged endpiece (13) presenting firstly an outside diameter (d2) smaller than the outside diameter (d1) of the rigid tube, and secondly a material thickness (e1) increased by at least 10% relative to its initial thickness (e);
threading a crimping bushing (5) over the swaged endpiece (13) as far as the first collar (6); and
implementing a metal spinning operation on the swaged endpiece (13) to make a second collar (7) which co-operates with the first collar (6) to clamp the crimping bushing (5) on the tube (2).

2. A method according to claim 1, **characterized in that** it consists in engaging the flexible hose (3) on the swaged endpiece (13) and in crimping the bushing (5) onto the flexible hose (3).

3. A method according to claim 1, **characterized in that** it consists in performing the extrusion operation on the endpiece of the rigid tube so that the ratio between the outside diameter (d2) of the swaged endpiece (13) over the outside diameter (d1) of the rigid tube (2) is less than or equal to 0,8.

4. A method according to claim 1 or claim 3, **characterized in that** it consists in performing the extrusion operation on the endpiece of the rigid tube in such a manner that the material thickness (e1) of the endpiece is increased relative to its initial thickness by a value lying in the range from 10% to 20% and preferably of about 15%.

5. A method according to claim 3 or claim 4, **characterized in that** it consists in performing the extrusion operation by means of a hoop (25) having an inlet cone (26) open to the outside and through which the endpiece of the rigid tube is inserted, the inlet cone (26) being connected to a return cone (28) oriented in the opposite direction to the inlet cone (26) via an extrusion zone (27) of diameter equal to the diameter (d2) of the swaged endpiece (13) to be made.

6. A method according to claim 1, **characterized in that** it consists in threading the crimping collar (5) on the swaged endpiece (13) during the operation of forming the second collar (7).

7. A method according to claim 1, 3 or 4, **characterized in that**, during the extrusion and/or metal spinning operation for making the second collar (7), it consists in inserting a calibration peg (25₂, 30₂) into the inside of the endpiece (21, 13) to guarantee a minimum through section for the swaged endpiece (13).

8. A connection system using a crimping bushing (5) to make a connection between a rigid tube (2) and a flexible hose (3), in which the system comprises a crimping bushing (5) crimped between first (6) and second (7) collars formed on the rigid tube (2), which tube presents, relative to the crimping bushing, a swaged endpiece, **characterized in that** the swaged endpiece presents both an outside diameter (d2) smaller than the outside diameter (d1) of the rigid tube, and a material thickness (e1) that is increased by at least 10% relative to the material thickness (e) of the rigid tube (2).

9. A connection system according to claim 8, **characterized in that** the swaged endpiece (13) possesses an outside diameter (d2) such that the ratio between said outside diameter and the outside diameter (d1) of the rigid tube is less than or equal to 0,8.

10. A connection system according to claim 8 or claim 9, **characterized in that** the swaged endpiece (13) possesses a material thickness (e₁) that is increased relative to the material thickness (e) of the rigid tube by a value lying in the range from 10% to 20% and preferably about 15%.

11. A connection system according to claim 8 or claim 9, **characterized in that** the flexible hose (3) is engaged on the swaged endpiece (13) and the bushing (5) is crimped onto the hose.

12. A connection system according to any one of claims 8 to 11, **characterized in that** the rigid tube presents a ratio between its thickness (e) and its outside diameter (d1) that is greater than 0,1.

## Patentansprüche

1. Verfahren zum Sicherstellen der Verbindung zwischen einem starren Rohr (2) und einem Schlauch (3) mit Hilfe einer Quetschhülse (5), wobei der Innendurchmesser (d3) des Schlauchs kleiner ist als der Außendurchmesser (d1) des starren Rohrs, wobei das Verfahren die folgenden Schritte umfaßt:
- durch einen Treibvorgang einen ersten Flansch (6) an dem starren Rohr (2) ausbilden, der mit dem benachbarten Ende ein Endstück (21) begrenzt,
- an dem Endstück (21) des starren Rohrs einen Ziehschritt durchführen, um ein verjüngtes Endstück (13) zu erhalten, das einerseits einen Außendurchmesser (d2) aufweist, welcher kleiner als der Außendurchmesser (d1) des starren Rohrs ist, sowie andererseits eine Materialdicke (e1), die gegenüber seiner Ausgangsdicke (e) um wenigstens 10 % vergrößert ist,
- die Quetschhülse (5) über das verjüngte Endstück (13) bis zu dem ersten Flansch (6) überstreifen, und
- mittels eines Treibvorgangs an dem verjüngten Endstück (13) einen zweiten Flansch (7) ausbilden, der mit dem ersten Flansch (6) zusammenwirkend das Festklemmen der Quetschhülse (5) an dem Rohr (2) sicherstellt.

2. Verfahren nach Anspruch 1, **dadurch gekennzeichnet, daß** es darin besteht, den Schlauch (3) auf das verjüngte Endstück (13) aufzupressen und das Aufquetschen der Hülse (5) auf den Schlauch (3) sicherzustellen.

3. Verfahren nach Anspruch 1, **dadurch gekennzeichnet, daß** es darin besteht, den Schritt des Ziehens an dem Endstück des starren Rohrs derart durchzuführen, daß das Verhältnis zwischen dem Außendurchmesser (d2) des verjüngten Endstücks (13) zu dem Außendurchmesser (d1) des starren Rohrs (2) kleiner oder gleich 0,8 ist.

4. Verfahren nach Anspruch 1 oder 3, **dadurch gekennzeichnet, daß** es darin besteht, den Schritt des Ziehens an dem Endstück des starren Rohrs derart zu vollziehen, daß die Materialdicke (e1) des Endstücks gegenüber seiner Ausgangsdicke um einen Wert zwischen 10 und 20 % und vorzugsweise in der Größenordnung von 15 % vergrößert wird.

5. Verfahren nach Anspruch 3 oder 4, **dadurch gekennzeichnet, daß** es darin besteht, den Schritt des Ziehens mit Hilfe eines Schrumpfrohrs (25) durchzuführen, das einen Eingangskonus (26) aufweist, der nach außen hin geöffnet ist und von dem Endstück des starren Rohrs durchgriffen wird, wobei der Eingangskonus (26) mittels eines Ziehbereichs (27), dessen Durchmesser gleich dem Durchmesser (d2) des herzustellenden verjüngten Endstücks (13) ist, mit einem Rückwärtskonus (28) verbunden ist, der in einer zur Richtung des Eingangskonus (26) entgegengesetzten Richtung ausgerichtet ist.

6. Verfahren nach Anspruch 1, **dadurch gekennzeichnet, daß** es darin besteht, die Quetschhülse (5) während des Vorgangs der Ausbildung des zweiten Flansches (7) über das verjüngte Endstück (13) zu streifen.

7. Verfahren nach einem der Ansprüche 1, 3 bis 4, **dadurch gekennzeichnet, daß** es darin besteht, während des Zieh- und/oder Treibvorgangs für die Ausbildung des zweiten Flansches (7) einen Kalibrierstift (25₂, 30₂) in das Endstück (21, 13) einzustecken, um einen minimalen Durchgangsquerschnitt für das verjüngte Endstück (13) zu gewährleisten.

8. System für die Verbindung zwischen einem starren Rohr (2) und einem Schlauch (3) mit Hilfe einer Quetschhülse (5), umfassend eine Quetschhülse (5), die beidseitig durch einen ersten Flansch (6) und einen zweiten Flansch (7) eingefaßt ist, die an dem starren Rohr (2) ausgebildet sind, das in Verbindung mit der Quetschhülse ein verjüngtes Endstück aufweist, **dadurch gekennzeichnet, daß** das verjüngte Endstück einerseits einen Außendurchmesser (d2) aufweist, welcher kleiner als der Außendurchmesser (d1) des starren Rohrs ist, sowie andererseits eine Materialdicke (e1), die gegenüber der Materialdicke (e) des starren Rohrs (2) um wenigstens 10 % vergrößert ist.

9. Verbindungssystem nach Anspruch 8, **dadurch gekennzeichnet, daß** das verjüngte Endstück (13) einen Außendurchmesser (d2) aufweist, welcher derart ist, daß das Verhältnis zwischen diesem und dem Außendurchmesser (d1) des starren Rohrs kleiner oder gleich 0,8 ist.

10. Verbindungssystem nach Anspruch 8 oder 9, **dadurch gekennzeichnet, daß** das verjüngte Endstück (13) eine Materialdicke (e1) aufweist, die gegenüber der Materialdicke (e) des starren Rohrs um einen Wert zwischen 10 und 20 % und vorzugsweise in der Größenordnung von 15 % vergrößert ist.

11. Verbindungssystem nach Anspruch 8 oder 9, **dadurch gekennzeichnet, daß** der Schlauch (3), auf den die Hülse (5) aufgequetscht ist, auf das verjüngte Endstück (13) aufgepreßt ist.

12. Verbindungssystem nach einem der Ansprüche 8 bis 11, **dadurch gekennzeichnet, daß** das starre Rohr ein Verhältnis zwischen seiner Dicke (e) und seinem Außendurchmesser (d1) aufweist, das größer als 0,1 ist.
